# EUROPÄISCHE PATENTSCHRIFT

(11) **EP 0 645 042 B1**
(45) Veröffentlichungstag und Bekanntmachung des Hinweises auf die Patenterteilung: **10.02.1999**
(21) Anmeldenummer: 94912537.1
(22) Anmeldetag: 24.03.1994
(51) Int. Cl.: G11B 7/007, G11B 7/24

(54) **PLATTENFÖRMIGER OPTISCHER SPEICHER UND VERFAHREN ZU DESSEN HERSTELLUNG**
DISK-SHAPED OPTICAL STORAGE MEDIUM AND PROCESS FOR PRODUCING THE SAME
SUPPORT D'ENREGISTREMENT OPTIQUE D'INFORMATIONS EN FORME DE DISQUE ET SON PROCEDE DE FABRICATION

(30) Priorität: 08.04.1993 DE 4311683
(43) Veröffentlichungstag der Anmeldung: 29.03.1995
(73) Patentinhaber: Sonopress Produktionsgesellschaft für Ton- und Informationsträger mbH, 33311 Gütersloh (DE)
(72) Erfinder: SCHIEWE, Hilmar, D-33332 Gütersloh (DE)
(74) Vertreter: Prietsch, Reiner, Dipl.-Ing.
(86) Internationale Anmeldenummer: EP9400944
(87) Internationale Veröffentlichungsnummer: WO9424665

(56) Entgegenhaltungen:
- EP-A- 0 520 251
- GB-A- 2 250 626
- NL-A- 9 101 358
- US-A- 4 967 286
- PATENT ABSTRACTS OF JAPAN vol. 10, no. 312 (P-509) 23. Oktober 1986 & JP,A,61 123 026 (MATSUSHITA) 10. Juni 1986

## Beschreibung

Die Erfindung betrifft einen plattenförmigen optischen Speicher für binäre Informationen, die seriell als Aufeinanderfolge von pits und lands längs einer spiraligen Spur in einer glatten optischen Bezugsfläche gespeichert sind, wobei die voneinander unabhängigen Längen der pits und der lands die gespeicherten Binärwerte verkörpern, die mittels eines fokussierten, der Spur nachgeführten Laserstrahls nach dem Interferenzprinzip auslesbar sind. Des weiteren betrifft die Erfindung ein Verfahren zur Herstellung eines sog. Glasmasters, von dem Matritzen gezogen werden können, die ihrerseits zur Massenherstellung eines solchen plattenförmigen Speichers dienen.

Eines der bekanntesten optischen Speichermedien der vorstehenden Gattung ist die Compact Disc, deren wesentliche Eigenschaften durch die Norm IEC 908 und durch die Spezifikation "Compact. Disc Digital Audio System Description", Juni 1989, Herausgeber Sony Corp. und N.V. Philips, festgelegt sind. Die Compact Disc weist u.a. folgende Merkmale auf: Die Informationen sind seriell in Form einer spiraligen Spur auf einer glatten Bezugsfläche aufgezeichnet und im Reflexionsmodus mittels eines fokussierten Laserstrahls auslesbar. In der Ebene der glatten Bezugsfläche ist der Fokusdurchmesser gleich der Spurbreite von etwa 1 µm. Innerhalb der Spur folgen trogartige Vertiefungen, die sog. pits, aufeinander, die in Spurrichtung und in radialer Richtung durch Bereiche der glatten Bezugsfläche voneinander getrennt sind. Die in Spurrichtung zwischen benachbarten pits liegenden Bereiche der Bezugsfläche werden lands genannt. Die Breite der pits beträgt weniger als die Hälfte der Spurbreite. Die Längen der pits und der lands verkörpern die gespeicherten Binärwerte, und zwar in der Weise, daß, in Spurrichtung gesehen, jeder Übergang zwischen einem pit und einem land bzw. zwischen einem land und einem pit als logische Eins, die übrigen Bereiche sowohl der pits als auch der lands jedoch als logische Null detektiert werden. Zum Detektieren der Übergänge bedient man sich des aus der DE-PS 22 08 379 bekannten Prinzips der destruktiven Interferenz. Diese hat bei einer gleichmäßig reflektierenden Plattenoberfläche ihr Optimum, wenn einerseits die Tiefe der pits genau einem Viertel der Wellenlänge des Leselichtbündels entspricht, andererseits die eine Hälfte des auffallenden Lichts an den das betreffende pit umgebenden Bereichen der glatten Bezugsfläche (einschließlich der lands), die andere Hälfte an dem Boden des pits reflektiert wird. Die Aufeinanderfolge von pits und lands würde dann die maximale Amplitudenmodulation des reflektierten Lichtbündels liefern. Unerläßliche Voraussetzung zum berührungslosen Auslesen eines optischen Speichermediums ist allerdings auch die Gewinnung eines Spurfolgesignals aus dem reflektierten Teil des Leselichtbündels. Das Spurfolgesignal ist jedoch bei einer Pittiefe von λ/4 = 0, durchläuft aber bei einer Pittiefe von λ/8 ein Maximum.

Weder bei der Compact Disc noch bei irgendeinem anderen, nach dem gleichen Ausleseprinzip arbeitenden optischen Speichermedium kann daher von der für die Rückgewinnung des Informationssignals optimalen Pittiefe von λ/4 Gebrauch gemacht werden. Vielmehr beträgt die Pittiefe etwa 0,225 λ. Bei einer Compact Disc aus transparentem Polycarbonat mit einem Brechungsindex von n=1,46, die bekanntlich durch das transparente Polycarbonat hindurch ausgelesen wird, sowie der üblichen Wellenlänge von 780 nm des Laserlichts, also einer Wellenlänge von 534 nm in dem Polycarbonat, beträgt daher die Pittiefe 120 nm.

Aus der DE-OS 41 21 505 ist eine Weiterentwicklung des optisches Speichermedium der vorgenannten Art bekannt, die zum Ziel hat, das Herstellverfahren durch Zulassung größerer Toleranzen der Pittiefe zu vereinfachen und insbesondere eine Verkürzung der Taktzeiten der zur Abformung der Speichermedien benutzten Spritzgießmaschinen zu ermöglichen, ohne daß dadurch die Kompatibilität des Speichermediums mit einem Speichermedium der einleitend angegebenen Gattung gefährdet wird. Hierzu ist bei dem weiterentwickelten Speichermedium statt einer Aufeinanderfolge von pits und lands eine durchgehende Rille vorgesehen, die tiefenmoduliert ist, nämlich erste Bereiche größerer Tiefe aufweist, die den pits entsprechen, sowie zweite Bereiche geringerer Tiefe, die den lands entsprechen, mit dazwischenliegenden stufenförmigen Übergängen. Dabei ist die Tiefe der ersten Bereiche genau gleich dem vorerwähnten Optimum von einem Viertel der Wellenlänge des Leselichtbündels bemessen, während die Tiefe der zweiten Bereiche etwa ein Sechzehntel dieser Wellenlänge beträgt.

Von den Speichermedien der vorliegenden Gattung hat insbesondere die Compact Disc eine sehr große Verbreitung und eine entsprechend hohe wirtschaftliche Bedeutung erlangt. Die einschlägigen Hersteller sehen sich nun zunehmend mit dem Problem der Raubkopien und der Piraterieware konfrontiert. Da das Herstellverfahren solcher optischer Speichermedien inzwischen allgemeiner Stand der Technik geworden ist und gut beherrscht wird, ist es weder dem Handel noch gar dem Letztabnehmer möglich, Piraterieware von Originalware zu unterscheiden.

Der Erfindung liegt daher die Aufgabe zugrunde, einen plattenförmigen Speicher der gattungsgemäßen Art mit einer äußerst schwer nachahmbaren, dauerhaften Kennzeichnung (von grundsätzlich beliebiger Form und Größe) zu versehen, die mit optischen Mitteln deutlich erkennbar ist.

Diese Aufgabe ist erfindungsgemäß dadurch gelöst, daß eine ausgewählte Anzahl der Gesamtheit der lands als im Vergleich zu der Tiefe der pits flache Vertiefungen in der optischen Bezugsfläche ausgebildet ist.

Überraschenderweise hat sich gezeigt, daß unabhängig von der Anzahl der in dieser Weise aus der optischen Bezugsfläche heraus verlegten lands die Kompatibilität eines solchen Speichermediums auch dann nicht beeinträchtigt ist, wenn die Pittiefe nicht entsprechend dem Vorschlag der DE-OS 41 21 505 gleich 0,25 λ sondern wie im sonstigen Stand der Technik gleich 0,225 λ ist. Der Vorschlag nach der Erfindung erlaubt es daher dem Hersteller, jedes einzelne Speichermedium ohne jeglichen zusätzlichen Aufwand während des Herstellprozesses an einer oder mehreren vorgegebenen Stellen mit einer Kennzeichnung in Form einer Anzahl von als flache Vertiefungen ausgebildeten lands zu versehen. Diese Kennzeichnung kann im Extremfall so klein sein, also so wenige lands umfassen, daß sie nur mit elektronenmikroskopischen Mitteln sichtbar gemacht werden kann, und auch dies mit vertretbarem Zeitaufwand nur dann, wenn der Ort, an dem sich diese Kennzeichnung befindet, bekannt ist.

Selbstverständlich müssen die in die optische Bezugsfläche eingetieften, der Kennzeichnung des Speichers dienenden lands auch in Spurrichtung nicht unmittelbar aufeinanderfolgen, können also auch durch mehr als 1 pit und die zwischen diesen pits liegenden "normalen" lands getrennt sein. Des weiteren brauchen die eingetieften lands nicht alle die gleiche Tiefe zu haben. Innerhalb eines vorgegebenen Tiefenbereiches können die Tiefen der lands vielmehr regellos oder nach einem vorgegebenen Muster unterschiedlich sein.

Ein weiterer, unerwarteter Effekt besteht darin, daß die erfindungsgemäß ausgebildeten lands, obwohl sie nur Bruchteile der Wellenlänge des Leselichtbündels in die optische Bezugsfläche eingetieft sind, Effekte zur Folge haben, die selbst bei Beleuchtung mit diffusem Weißlicht (z.B. Tageslicht) visuell wahrnehmbar sind, und zwar bei einer ausreichend großen Anzahl derart ausgebildeter lands mit dem unbewaffneten Auge. Bevorzugt wird deshalb eine Ausführungsform, bei der die in Spurrichtung aufeinanderfolgenden und/oder die in radialer Richtung benachbarten, als Vertietungen ausgebildeten lands ein makroskopisches Muster bilden. Dieses Muster hebt sich von der übrigen Oberfläche des Speichers je nach Lichteinfalls- und Betrachtungswinkel durch eine abweichende Graustufe, ähnlich einem sog. Wasserzeichen, ab. Daß das so erzeugte visuelle Muster von grundsätzlich beliebiger Art sein kann, also beispielsweise den Namen oder das Signet des Herstellers, den Titel des gespeicherten Programmaterials oder ähnliches wiedergeben kann, liegt auf der Hand.

Bevorzugte Möglichkeiten der Gestaltung der Geometrie der als Vertiefungen ausgebildeten lands sind in den Ansprüchen 3 bis 5 angegeben.

Soweit im Anspruch 1 die der Kennzeichnung dienenden lands als im Vergleich zu der Tiefe der pits "flache" Vertiefungen bezeichnet sind und diese Tiefe im Anspruch 5 mit maximal 30% der Tiefe der pits angegeben ist, beziehen sich diese Vorschriften auf den Fall, daß die damit erzeugte Kennzeichnung innerhalb der zum Auslesen des Speichers benötigten Speicherfläche liegt. Diese Fläche umfaßt z. B. bei der CD zusätzlich zu dem sog. Programmbereich einen lead-in - Bereich und einen lead-out - Bereich. Die außerhalb dieser Bereiche liegenden Flächen des Speichermediums sind für den Aus lesevorgang und damit für die ordnungsgemäße Funktion des Abspielgerätes unerheblich. Dort entfallen daher die vorstehend genannten Beschränkungen der Tiefe der zur Kennzeichnung des Speichers verwendeten besonderen, also in die optische Bezugsfläche eingetieften lands. Dies bedeutet, daß bei pits und lands, die außerhalb der zum Auslesen des Speichers benötigten Speicherfläche angeordnet sind, die Tiefe der in die optische Bezugsfläche eingetieften lands beliebig ist und deshalb beispielsweise so optimiert werden kann, daß die dadurch geschaffene Kennzeichnung einen besonders hohen Kontrast zu der übrigen Speicherfläche aufweist und daher besonders leicht mit dem unbewaffneten Auge wahrgenommen werden kann.

Die weitere Aufgabe der Erfindung, ein Verfahren zur Herstellung eines Glasmasters anzugeben, mittels dessen über die üblichen Zwischenschritte ein optischer Speicher mit der vorgeschlagenen Kennzeichnung produziert werden kann, ist dadurch gelöst, daß die Intensität des Laserstrahls im Bereich von lands, die als Vertiefungen in der optischen Bezugsfläche ausgebildet werden sollen, auf einen Wert verringert wird, der innerhalb der zum Auslesen des Speichers benötigten Speicherfläche maximal 50% des die pits erzeugenden Intensitätswertes beträgt und außerhalb dieser Fläche zwischen einem technisch sinnvollen Minimalwert und 100% des die pits erzeugenden Intensitätswertes liegt. Mit anderen Worten wird also der Laserstrahl im Bereich der normalen lands wie bisher ausgetastet, im Bereich der als Vertiefungen in der optischen Bezugsfläche ausgebildeten lands jedoch auf einen geringeren als denjenigen Intensitätswert geschaltet, der zur Erzeugung der pits benutzt wird. Sofern dabei die Tiefe der als Vertiefung in der optischen Bezugsfläche ausgebildeten lands variiert werden soll, wird dabei mit einer der Zahl der unterschiedlichen Tiefen entsprechenden Zahl unterschiedlicher Intensitätswerte gearbeitet.

Die Erfindung wird nachfolgend anhand der Zeichnung erläutert. Es zeigt:
- Fig. 1: eine Aufsicht auf eine Compact Disc, die mit einer Kennzeichnung "CD" nach dem vorliegenden Vorschlag versehen ist und
- Fig. 2: die Oberflächentopographie, z.B. an der Stelle "X" in Fig. 1, in Schrägansicht bei etwa 6000-facher Vergrößerung

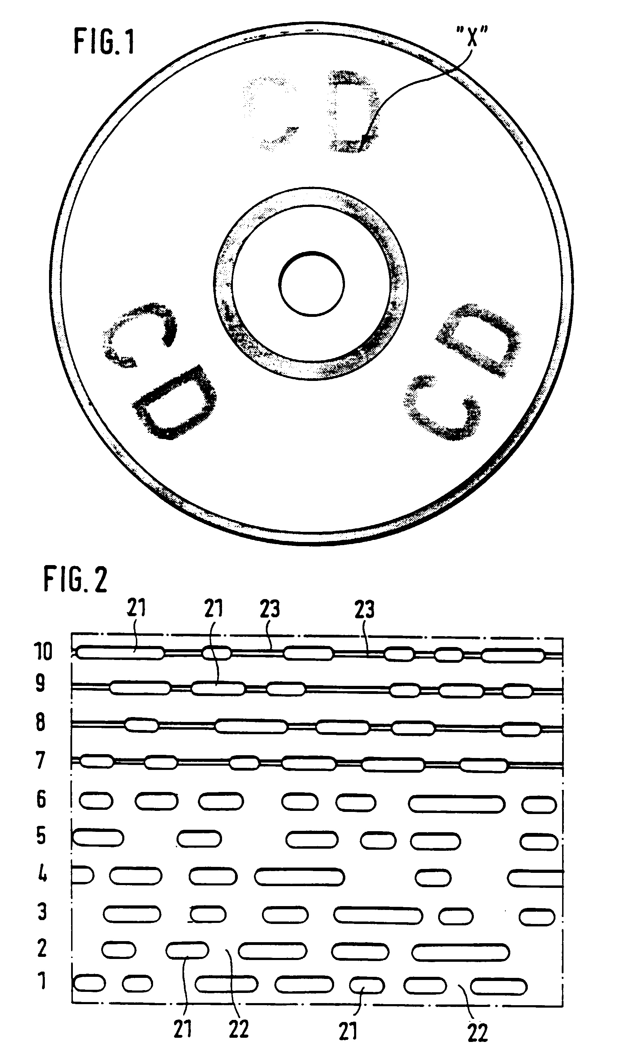

Die in Fig. 1 lediglich stellvertretend für optische Speicher der einleitend angegebenen Gattung dargestellte Compact Disc zeigt an drei Stellen eine wasserzeichenartige, ebenfalls nur beispielhaft zu verstehende Kennzeichnung "CD", die sich in der insgesamt spiegelnden Oberfläche als veränderter (dunklerer) Grauwert darstellt. Je nach Betrachtungswinkel sind alle drei Kennzeichnungen gleichzeitig, ggf. aber auch nur eine oder zwei Kennzeichnungen sichtbar.

In Fig. 2 ist die Oberflächentopographie in Schrägansicht, gesehen von der Prägeseite her, dargestellt. Die wiedergegebenen Spuren sind am linken Rand (willkürlich) numeriert. Die Ausschnitte aus den Spuren 1 bis 6, die wegen der starken Vergrößerung linear erscheinen, makroskopisch jedoch spiralig aufeinanderfolgen, zeigen Abfolgen von unterschiedlich langen pits 21 und lands 22, entsprechend den in dem dargestellten Teilbereich gespeicherten binären Informationen. Bei den lands 22 handelt es sich mit anderen Worten um die der betreffenden Spur angehörenden Bereiche der optischen Bezugsfläche.

In den Spuren 7 bis 10 sind hingegen - in dem hier dargestellten Ausschnitt - die lands als im Vergleich zu der Tiefe der unverändert gebliebenen pits 21 flache Vertiefungen 23 in der optischen Bezugsfläche ausgebildet. Man erkennt, daß die so gestalteten lands ein U-förmiges Querschnittsprofil haben und nur wenig schmaler als die pit 21 sind. Sofern die pits 21 und die lands 22 bzw. 23 nicht nach dem bekannten laseroptisch/photographischen Verfahren sondern z.B. mittels eines Schneidstichels auf dem sog. Master erzeugt werden, bilden sowohl die pits 21 als auch die lands 23 im Querschnitt das Negativ der Form des Schneidstichels, haben also jeweils ein V-förmiges Querschnittsprofil. Wegen ihrer geringen und vorzugsweise weniger als 20% der Tiefe der pits betragenden Tiefe haben die lands dann zwangsläufig eine wesentlich geringere Breite als die pits (nicht dargestellt).

Im vorliegenden Ausführungsbeispiel werden auf der Compact Disc der Fig. 1 in den Oberflächenbereichen, in denen die Kennzeichnung "CD" wasserzeichenartig angeordnet ist, als flache Vertiefungen ausgebildete lands 23 erzeugt bzw. geschrieben, während es in allen übrigen Oberflächenbereichen bei den üblichen lands 22 bleibt. Wenn statt der hier gewählten, makroskopischen Kennzeichnung "CD" ein plattenförmiger optischer Speicher mit einer "versteckten" Kennzeichnung versehen werden soll, die also mit bloßem Auge und ggf. auch mit dem Lichtmikroskop nicht feststellbar ist, braucht hierzu lediglich die Anzahl der nach dem Vorschlag der Erfindung ausgebildeten lands 23 entsprechende verringert und an einer nur dem Hersteller des Speichers bekannten Stelle ausgebildet zu werden. Des weiteren können konventionelle lands 22 und erfindungsgemäß ausgebildete lands 23 innerhalb der gleichen Spur aufeinanderfolgen, wobei die Aufeinanderfolge ihrerseits eine binäre Information verkörpern kann.

Ausgangspunkt zur Herstellung plattenförmiger optischer Speicher der vorliegenden Art ist in der Regel ein Glasmaster, der mit einer Photolackschicht überzogen und mit einem Laserstrahl spurenweise belichtet wird. Dort wo die Photolackschicht belichtet worden ist, entstehen nach dem Entwickeln des Glasmasters die als pits bezeichneten Vertiefungen. Sollen nun lands 23 der vorgeschlagenen Art geschrieben werden, so wird in den entsprechenden Bereichen die Intensität des belichtenden Laserstrahls nicht auf Null sondern auf einen Wert verringert, der einige 10% des die pits erzeugenden Intensitätswertes beträgt.

## Patentansprüche

1. Plattenförmiger optischer Speicher für binäre Informationen, die seriell als Aufeinanderfolge von pits (21) und lands (22) längs einer spiraligen Spur (1 bis 10) in einer glatten optischen Bezugsfläche gespeichert sind, wobei die voneinander unabhängigen Längen der pits (21) und der lands (22) die gespeicherten Binärwerte verkörpern, die mittels eines fokussierten, der Spur nachgeführten Laserstrahls nach dem Interferenzprinzip auslesbar sind, dadurch gekennzeichnet, daß eine ausgewählte Anzahl der Gesamtheit der lands als im Vergleich zu der Tiefe der pits (21) flache Vertiefungen (23) in der optischen Bezugsfläche ausgebildet ist.

2. Speicher nach Anspruch 1, dadurch gekennzeichnet, daß die in Spurrichtung aufeinanderfolgenden und/oder die in radialer Richtung benachbarten, als Vertiefungen ausgebildeten lands (23) ein makroskopisches Muster bilden.

3. Speicher nach Anspruch 1 oder 2, dadurch gekennzeichnet, daß die als Vertiefungen ausgebildeten lands (23) ein U-förmiges Querschnittsprofil und eine etwa der Breite der pits (21) entsprechende Breite haben.

4. Speicher nach Anspruch 1 oder 2, dadurch gekennzeichnet, daß die als Vertiefungen ausgebildeten lands ein V-förmiges Querschnittsprofil und eine geringere Breite als die pits haben.

5. Speicher nach einem der Ansprüche 1 bis 4, dadurch gekennzeichnet, daß die Tiefe der als Vertiefungen ausgebildeten lands (23) weniger als 30% der Tiefe der pits (21) beträgt.

6. Verfahren zur Herstellung eines Glasmasters für einen plattenförmigen optischen Speicher nach einem der Ansprüche 1 bis 5 durch spurenweises Belichten der Fotolackschicht des Glasmasters mit einem Laserstrahl im Bereich der zu erzeugenden pits (21) und nachfolgendes Entwickeln des Glasmasters bis die Fotolackschicht an den belichteten Stellen Vertiefungen aufweist, dadurch gekennzeichnet, daß die Intensität des Laserstrahls im Bereich von lands, die als Vertiefungen (23) in der optischen Bezugsfläche ausgebildet werden sollen, auf einen Wert verringert wird, der innerhalb der zum Auslesen des Speichers benötigten Speicherfläche maximal 50% des die pits (21) erzeugenden Intensitätswertes beträgt und außerhalb dieser Fläche zwischen einem technisch sinnvollen Minimalwert und 100% des die pits (21) erzeugenden Intensitätswertes liegt.

## Claims

1. A disc-shaped optical store for items of binary information which are stored serially as a succession of pits (21) and lands (22) along a spiral track (1 to 10) in a smooth optical reference surface, wherein the mutually independent lengths of the pits (21) and the lands (22) embody the stored binary values which can be read out by means of a focussed track-following laser beam, in accordance with the interference principle, characterised in that a selected number of the totality of the lands is in the form of depressions (23) in the optical reference surface, the depressions being shallow in comparison with the depth of the pits (21).

2. A store according to claim 1 characterised in that the lands (23) which occur in succession in the track direction and/or the lands (23) which are adjacent in the radial direction and which are in the form of depressions form a macroscopic pattern.

3. A store according to claim 1 or claim 2 characterised in that the lands (23) which are in the form of depressions are of a U-shaped cross-sectional profile and are of a width approximately corresponding to the width of the pits (21).

4. A store according to claim 1 or claim 2 characterised in that the lands in the form of depressions are of a V-shaped cross-sectional profile and are of a smaller width than the pits.

5. A store according to one of claims 1 to 4 characterised in that the depth of the lands (23) in the form of depressions is less than 30% of the depth of the pits (21).

6. A process for the production of a glass master for a disc-shaped optical store according to one of claims 1 to 5 by track-wise exposure of the photoresist layer of the glass master with a laser beam in the region of the pits (21) to be produced and subsequent development of the glass master until the photoresist layer has depressions at the exposed locations, characterised in that in the region of lands which are to be in the form of depressions (23) in the optical reference surface the intensity of the laser beam is reduced to a value which within the storage surface required for reading-out of the store is a maximum of 50% of the intensity value producing the pits (21) and which outside that surface is between a technically meaningful minimum value and 100% of the intensity value producing the pits (21).

## Revendications

1. Support d'enregistrement optique en forme de disque pour informations binaires qui sont enregistrées en série sous la forme d'une succession de creux (21) et de bosses (22) le long d'une piste spirale (1 à 10) dans une surface de référence optique lisse, les longueurs des creux (21) et des bosses (22), qui sont indépendantes les unes des autres, matérialisant les valeurs binaires enregistrées qui peuvent être lues au moyen d'un rayon laser focalisé guidé le long de la piste, selon le principe des interférences, caractérisé en ce que, parmi l'ensemble des bosses, un certain nombre sont réalisées dans la surface de référence optique sous la forme d'évidements peu profonds (23), comparativement à la profondeur des creux (21).

2. Support d'enregistrement selon la revendication 1, caractérisé en ce que les bosses (23) réalisés sous la forme d'évidements, qui se succèdent dans la direction de la piste et/ou sont voisins dans la direction radiale, forment un motif macroscopique.

3. Support d'enregistrement selon la revendication 1 ou 2, caractérisé en ce que les bosses (23) réalisées sous la forme d'évidements ont un profil transversal en forme de U et une largeur à peu près égale à la largeur des creux (21).

4. Support d'enregistrement selon la revendication 1 ou 2, caractérisé en ce que les bosses réalisées sous la forme d'évidements ont un profil transversal en forme de V et une plus petite largeur que les creux.

5. Support d'enregistrement selon une des revendications 1 à 4, caractérisé en ce que la profondeur des bosses (23) réalisées sous la forme d'évidements est inférieure à 30 % de la profondeur des creux (21).

6. Procédé pour fabriquer un modèle en verre pour un support d'enregistrement optique en forme de disque selon une des revendications 1 à 5 en éclairant la couche de laque photosensible du modèle en verre avec un rayon laser dans la région des creux (21) à produire et en développant ensuite le modèle en verre jusqu'à ce que la couche de laque photosensible présente des évidements aux endroits éclairés, caractérisé en ce que, dans la région des bosses qui doivent être réalisées sous la forme d'évidements (23) dans la surface de référence optique, l'intensité du rayon laser est réduite à une valeur qui, dans la surface du support d'enregistrement qui est nécessaire pour la lecture du support d'enregistrement, représente au maximum 50 % de la valeur de l'intensité qui produit les creux (21), tandis qu'en dehors de cette surface, elle est comprise entre une valeur minimale techniquement appropriée et 100 % de la valeur d'intensité qui produit les creux (21).
